(19) Europäisches Patentamt / European Patent Office / Office européen des brevets

(11) EP 2 686 282 B1

(12) # EUROPÄISCHE PATENTSCHRIFT

(45) Veröffentlichungstag und Bekanntmachung des Hinweises auf die Patenterteilung:
**02.05.2018 Patentblatt 2018/18**

(21) Anmeldenummer: **12708533.0**

(22) Anmeldetag: **07.03.2012**

(51) Int Cl.:
***C04B 28/02*** *(2006.01)* ***C04B 24/12*** *(2006.01)*
***C04B 24/42*** *(2006.01)* ***C04B 40/00*** *(2006.01)*
***C04B 111/62*** *(2006.01)* *B01D 19/04 (2006.01)*
*C04B 103/40 (2006.01)*

(86) Internationale Anmeldenummer:
**PCT/EP2012/053833**

(87) Internationale Veröffentlichungsnummer:
**WO 2012/123291 (20.09.2012 Gazette 2012/38)**

(54) **MINERALISCHEN BAUSTOFFMASSEN**

MINERAL BUILDING MATERIAL COMPOSITIONS

MATÉRIAUX DE CONSTRUCTIONS MINÉRAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2011 DE 102011005484**

(43) Veröffentlichungstag der Anmeldung:
**22.01.2014 Patentblatt 2014/04**

(73) Patentinhaber: **Evonik Degussa GmbH**
**45128 Essen (DE)**

(72) Erfinder:
- **SCHEUERMANN, Ralph**
  **45359 Essen (DE)**
- **KOENIG, Frank**
  **45884 Gelsenkirchen (DE)**
- **VETTER, Andreas**
  **45355 Essen (DE)**
- **HEISSING, Jörn**
  **45329 Essen (DE)**
- **ROOS, Markus**
  **45289 Essen (DE)**

(74) Vertreter: **Lang, Arne et al**
**Evonik Industries AG**
**Intellectual Property Management**
**Bau 1042A / PB 15**
**Paul-Baumann-Straße 1**
**45764 Marl (DE)**

(56) Entgegenhaltungen:
**WO-A1-2004/056445** **DE-A1- 2 829 906**
**DE-A1- 10 107 822** **JP-A- 2006 232 651**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung sind mineralische Baustoffmassen, die in Bezug auf Fließverhalten und Luftgehalt optimal eingestellt sind, wodurch sehr glatte, nahezu porenfreie Oberflächen erzielt werden können. Die heute erhältlichen mineralischen Baustoffmassen müssen unter Anwendungsbedingungen immer wieder zu vergleichbaren Ergebnissen führen, sowie einfach zuzubereiten und zu verwenden sein. Unter den mineralischen Baustoffmassen kommt fließfähigen Massen wie Estrichen und selbst-nivellierenden Systemen, sogenannten selbstverlaufenden Bodenausgleichsmassen (engl. Self-levelling Underlayments, SLU) eine besondere Bedeutung zu, weshalb diese bestimmte Eigenschaften aufweisen müssen: sie müssen leicht verlaufen können, um Unebenheiten des Bodens auszugleichen und dabei noch gut verarbeitbar sein, nach dem Verlaufen zu einer festen und gut belastbaren Schicht mit einer guten Tragfähigkeit und Beständigkeit gegen Abrieb und Abrasion aushärten und dabei noch eine möglichst glatte Oberfläche aufweisen, die aber weiterhin noch gute Hafteigenschaften aufweisen muss, damit ein Oberbelag sicher und dauerhaft auf der Bodenausgleichsmasse aufgebracht werden kann.

Vor allem in Altbauten weisen Fußböden häufig starke Gebrauchsspuren auf. Mit der Zeit werden sie nicht nur unansehnlich, sondern auch uneben. Alte Holzdielen sind z. B. oftmals schon so weit ausgetreten, dass sie nicht mehr renoviert werden können. Wenn der Untergrund zwar uneben, aber noch ausreichend tragfähig ist, reicht es aus, eine selbstverlaufende Bodenausgleichsmasse aufzubringen. Auf Betonböden oder alten Fliesen ist das einfach. Dort kann die Masse direkt ausgegossen werden. Aber auch Holzfußböden können mit einer solchen Masse begradigt werden. Unebenheiten bis zu mehreren Zentimetern sind keine Seltenheit. Aufgrund der ungleichmäßigen Schichtdicken der resultierenden Ausgleichsmassenschicht ist eine Abbindung ohne Volumenverlust wünschenswert, um eventuelle Wiederholungen des Nivellierungsvorganges zu vermeiden. Aber auch bei Neubauten spielen selbstnivellierende Systeme eine zunehmend größere Rolle, insbesondere bei großen Flächen wie z.B. Parkhäusern oder Fabrikhallen.

Sowohl in der Renovierung als auch bei Terminbaustellen spielt die kurze Bauzeit eine immer größere Rolle. Sei es, um Fertigstellungstermine einzuhalten oder um die schnelle Begehbarkeit der ausgeglichenen Bodenflächen für die herkömmliche Nutzung wiederherzustellen. Schon nach nur wenigen Stunden soll der Boden wieder begehbar und z.B. mit Fliesen, Naturstein, PVC oder Teppichboden belegbar sein.

Während der Verarbeitung sind Bodenausgleichsmassen mit guten Verlaufseigenschaften und langer verlaufsoffener Zeit wünschenswert. Hierdurch sollen sich sehr ebene Oberflächen ohne großen Aufwand erzielen lassen. Ein niedriger Luftgehalt der frischen und insbesondere der ausgehärteten Masse ist für die Tragfähigkeit und Abriebbeständigkeit von großer Relevanz. Eine homogene, krater- und blasenfreie Oberfläche ist nicht nur aus ästhetischen sondern insbesondere für die mechanischen Eigenschaften von großer Bedeutung.
Es sind deshalb Baustoffmassen wünschenswert, die vorzugsweise folgende Eigenschaften aufweisen:

- hoch fließfähig, charakterisiert durch das Ausbreitmaß
- keinen negativen Einfluß auf die Verarbeitungszeit (Offenzeit) und damit in Abhängigkeit von der Anwendung schnell erhärtend und früh begehbar und belegbar
- nicht-schrumpfend
- maschinell zu verarbeiten.

Mineralische Baustoffmassen und deren Bedeutung sind dem Fachmann bekannt und in der Literatur vielfach beschrieben, so z. B. von Leopolder, ZKG International, 32 in Nr. 4 (2010) oder Schumacher M. in Baustoffpraxis, 22, Heft12 (2009).

In der Vergangenheit gab es verschiedene Ansätze, die Eigenschaften von solchen mineralischen Baustoffmassen zu verbessern.

FR 2943665 A1 beschreibt mineralische Bodenausgleichmassen enthaltend 10 bis 50 Gew.-% Ettringit, und 50 bis 90 Gew.-% an Aggregaten, von denen mindestens 30 Gew.-% synthetische anorganische Aluminocalcite sind.

In EP 0934915 A1 wird selbstnivellierender, besonders leistungsstarker Beton und dessen Herstellung beschrieben. Zur Herstellung werden pro 100 Teilen Zement 0,1 bis 10 Teile eines Entschäumungsmittels zugegeben und 0,1 bis 10 Teile eines Fließ- und Wasserreduzierungsmittels. Als Entschäumungsmittel werden bevorzugt Silikate, die mit polymerisiertem Glycol behandelt sind oder Mischungen aus Dodecylalkohol und Polypropylenglykol und entsprechend veränderte Silikate eingesetzt.

WO 2004/056445 A1 offenbart ein Zusatzmittel für zementöse Zusammensetzungen, bestehend aus einer Mischung aus einem Entschäumer und einem Amin-Lösungsvermittler.
DE 28 29 906 A1 offenbart eine Zusammensetzung bestehend aus einer Mischung enthaltend einen wasserlöslichen Emulgator und ein wasserunlösliches Entschäumeröl.
DE 101 07 822 A1 offenbart eine Baustoffmischung zur Herstellung von Fließestrichen, die ein nicht ionisches Tensid und einen Entschäumer enthält.

Aufgabe der vorliegenden Erfindung war es, mineralischen Baustoffmassen bereitzustellen insbesondere mineralischen Bodenausgleichmassen, die vorzugsweise bessere Fließeigenschaften, eine bessere Oberflächengüte aufweisen, einen niedrigen Luftgehalt und die einfach herzustellen und zu verarbeiten sind.

Damit lassen sich die Verwendungseigenschaften von mineralischen Baustoffmassen, insbesondere mineralischen Bodenausgleichmassen verbessern sowie der Luftgehalt verringern.

Die erfindungsgemäßen mineralischen Baustoffmassen haben den Vorteil, dass eine Verbesserung in Bezug auf Oberflächengüte und/oder Luftgehalt und damit auch Druckfestigkeit und/oder Abrasionsbeständigkeit aber auch der Fließeigenschaften vor der Aushärtung erreicht wird.

Ein weiterer Vorteil der Zusammensetzung liegt in der vielseitigen Einsetzbarkeit, die nahezu unabhängig von den sonstigen Bestandteilen der mineralischen Baustoffmassen ist.

Gegenstand der Erfindung ist somit eine mineralische Baustoffmasse enthaltend eine Zusammensetzung bestehend aus einer Mischung oder umfassend eine Mischung enthaltend,

a) mindestens eine Komponente, die eine Verbindung N aufweist, welche ein amphoteres Tensid darstellt, die in wässrigen zementären Bindemittelsystemen benetzende Wirkung zeigt und

b) mindestens eine Komponente, die eine Verbindung E aufweist, welche ein unter Anwendungsbedingungen in Wasser unlösliches Öl ist, die in wässrigen zementären Bindemittelsystemen entschäumende Eigenschaften zeigt, wobei die Verbindung E von der Verbindung N verschieden ist und

das Massenverhältnis von Verbindung N zu Verbindung E von 0,001 zu 1 bis 1000 zu 1 beträgt,

wobei die Komponente a) und/oder die Komponente b) die Verbindung N oder die Verbindung E aufgetragen oder geträgert, absorbiert, verkapselt oder adsorbiert auf einem Trägermaterial aufweist, wobei das Trägermaterial aus anorganischen oder organischen Materialien oder deren Mischungen ausgewählt ist.

Die Zusammensetzung kann bei einer Temperatur von 25 °C als Feststoff vorliegen. Bevorzugt ist die erfindungsgemäße Zusammensetzung dadurch gekennzeichnet, dass die Verbindung N der Komponente a) und/oder die Verbindung E der Komponente b) bei einer Temperatur von 25 °C als Feststoff vorliegen.

Ein weiterer Gegenstand der Erfindung besteht darin, dass die Komponente a) und/oder die Komponente b) der Zusammensetzung ausschließlich aus der jeweiligen Verbindung N oder der jeweiligen Verbindung E bestehen kann.

In einer weiteren Ausgestaltung der Erfindung können sowohl die Zusammensetzungen als auch die Komponenten a) und/oder b), als auch die Verbindungen N oder E selbst aufgetragen auf einem Träger absorbiert, verkapselt oder adsorbiert auf einem Trägermaterial vorliegen, wobei das Trägermaterial ausgewählt sein kann aus anorganischen oder organischen Materialien oder deren Mischungen, vorzugsweise Kieselsäuren, Aluminiumoxid, Sand, Zement, Flugasche, Bentonite, Xonolite oder Kalk oder Stärke, Cellulose, Holzgranulate oder Proteine, Kunststoffgranulate, besonders bevorzugt werden unter Kostengesichtspunkten anorganische Trägermaterialien eingesetzt. Ist mindestens eine der Komponenten selbst bei 25°C ein Feststoff, so kann die jeweils andere Komponente auf der ersten selbst aufgetragen oder geträgert, absorbiert oder adsorbiert sein oder sollten beide Komponenten Feststoffe bei 25°C darstellen in einfacher Weise physikalisch gemischt werden.

Der Massenanteil der Verbindungen N oder der Verbindungen E bezogen auf die Summe der Massen der Verbindungen N bzw. Verbindungen E und der Trägermaterialien in den jeweiligen Komponenten a) und/oder b) kann von 0,001 bis 50 Gew.-% betragen, bevorzugt 0,01 bis 30 Gew.-%, besonders bevorzugt 0,1 bis 20 Gew.-%, ganz besonders bevorzugt 1 bis 10 Gew.-%.

Der Massenanteil der bei 25°C flüssigen Verbindungen bezogen auf die Summe der bei 25°C festen Anteile der Zusammensetzung bestehend aus den Verbindungen N und E, sowie dem Trägermaterial kann von 0,002 bis 60 Gew.-% betragen, bevorzugt 0,02 bis 35 Gew.-%, besonders bevorzugt 0,05 bis 25 Gew.-%, ganz besonders bevorzugt 0,5 bis 12 Gew.-% betragen.

Die Zusammensetzung beinhaltet mindestens eine Verbindung N in Komponente a), die ein amphoteres Tensid darstellt. Das amphotere Tensid kann vorzugsweise ein Betain sein, besonders bevorzugt ein Betain das flüssig oder fest sein kann und insbesondere ein bei einer Temperatur von 25 °C als Feststoff vorliegendes Betain.

Die Verbindung E in Komponente b) der erfindungsgemäßen Zusammensetzung kann bevorzugt ein Polyetherpolysiloxan sein, wobei das Polyetherpolysiloxan auf einem Trägermaterial, vorzugsweise einem anorganischen Trägermaterial, bevorzugt Flugasche, aufgebracht sein kann.

Die Komponente a) der erfindungsgemäßen Zusammensetzung kann ein bei einer Temperatur von 25 °C als Feststoff vorliegendes Betain sein, die Komponente b) aus einem gegebenenfalls flüssigen Polyetherpolysiloxan aufgebracht auf Flugasche als Trägermaterial bestehen, wobei der Anteil der Verbindung E an Komponente b) von 1 bis 10 Gew.-% und das Massenverhältnis von Komponente a) zu Komponente b) von 1 zu 10000 bis 1 zu 1, bevorzugt 1 zu 1000 bis 1 zu 10 und besonders bevorzugt 1 zu 500 bis 1 zu 20 beträgt.

Die Zusammensetzung kann neben der Mischung enthaltend die Komponenten a) und b) weitere Zusätze aufweisen und der Massenanteil der Summe der Komponenten a) und b) von 0,001 bis 10 Gew.-%, bevorzugt von 0,01 bis 5 Gew.-% und besonders bevorzugt von 0,05 bis 1 Gew.-% bezogen auf die Masse der gesamten Zusammensetzung betragen.

Diese weiteren Zusätze können ausgewählt sein aus Wasser, Bindern oder Bindemitteln, vorzugsweise Portlandzement und/oder Tonerdezement, Füllstoffen, vorzugsweise Calziumsulfat, dessen Hydrate, Quarzsand und/oder Kalksteinmehl, Additive, vorzugsweise redispergierbare Pulver, Abbindebeschleunigern, vorzugsweise Lithiumcarbonat, Abbindeverzögerer, vorzugsweise Zitronensäure, Schwundreduzierer, Verflüssiger und Fließmittel.

In einer weiteren Ausgestaltung der Erfindung kann die Zusammensetzung neben der Mischung enthaltend die Komponenten a) und b) weitere Zusätze aufweisen, wobei eine weitere Komponente Portlandzement, Gips und/oder Tonerdezement oder deren Mischungen sein kann.

Die Zusammensetzungen werden als mineralische Baustoffmassen oder als Bestandteil von mineralischen Baustoffmassen, bevorzugt selbstverlaufenden mineralischen Bodenausgleichsmassen oder in selbstnivellierenden mineralischen Bodenausgleichsmassen eingesetzt. Dabei kann die mineralische Baustoffmasse auch mit organischen Bindemitteln oder Bindern gemischt sein.

Ein weiterer Gegenstand der Erfindung ist auch ein Verfahren zur Herstellung einer mineralischen Baustoffmasse, wobei eine Zusammensetzung mit Wasser und Bindern, vorzugsweise Portlandzement, Gips und/oder Tonerdezement, und optional einer oder mehrerer weiterer Komponenten, ausgewählt aus Füllstoffen, vorzugsweise Calciumsulfat, dessen Hydrate, Quarzsand und/oder Kalksteinmehl, Additive, vorzugsweise redispergierbare Pulver, Abbindebeschleuniger, vorzugsweise Lithiumcarbonat, Abbindeverzögerer, vorzugsweise Zitronensäure, Schwundreduzierer, Verflüssiger und Fließmittel, oft auch mit den Fachbegriffen *"plasticizer" und "superplasticizer" bezeichnet,* vermischt wird.

Die Zusammensetzungen können in mineralischen Baustoffmassen zur Herstellung von Böden die vorzugsweise selbst nivellierend sind, verwendet werden.

Als Verbindung E der Komponente b) werden solche eingesetzt, die ausgewählt sind aus unter Anwendungsbedingungen in Wasser unlöslichen Ölen. Die Öle können zur Wirkungsverbesserung feinteilige, hydrophobe Partikel beinhalten. Solche hydrophoben Feststoffe, Öle bzw. Dispersionen von Partikeln in Ölen können durch Abmischung mit Additiven (z.B. Emulgatoren) so modifiziert werden, dass sie in wässrigen Anwendungen einfach mit wenig Scherung emulgierbar sind. Gegebenenfalls können diese Öle bzw. Dispersionen auch direkt zu wässrigen Emulsionen formuliert werden, wobei übliche Additive (Emulgatoren, Verdicker, Schutzkolloide, Konservierungsstoffe) und Homogenisierungstechniken zur Emulsionsherstellung verwendet werden können.

Beispiele für hydrophobe Öle, die als Verbindung E eingesetzt werden können sind Mineralöle (A), Pflanzenöle (B), Siliconöle (C), Polyoxyalkylene (D), modifzierte Polysiloxane (P), sowie Mischungen zweier oder mehrerer dieser Verbindungen.

Bei den Mineralölen (A) kann es sich insbesondere um Brennöle, Mineraldichtungsöle, Naphthenöle und Paraffinöle handeln.

Pflanzenöle (B) (pflanzliche Öle) sind aus Ölpflanzen gewonnene Fette und fette Öle. Ausgangsstoffe zur Herstellung von Pflanzenöl sind Ölsaaten und -früchte, in denen das Öl in Form von Lipiden vorliegt. Pflanzenöle und -fette sind vorwiegend Ester des Glycerols mit Fettsäuren, sogenannte Triglyceride. Die Abgrenzung zu den Pflanzenfetten ist die Fließfähigkeit bei Zimmertemperatur. Bei den ebenfalls aus Pflanzen gewonnenen ätherischen Ölen handelt es sich nicht um Pflanzenöle. Im Gegensatz zu Pflanzenölen hinterlassen diese beim Trocknen auf Papier keine Fettflecken. Dazu gehören beispielsweise Sonnenblumenöl, Rapsöl, Diestelöl, Sojaöl, Maiskeimöl, Erdnussöl, Olivenöl, Bauwollsaatöl, Palmöl, Palmkernfett, Kokosfett.

Bei den Siliconölen (C) kann es sich um lineare oder verzweigte Polysiloxane handeln, die Methyl- und/oder Hydroxyl-Endgruppen besitzen und bevorzugt eine Brookfield-Viskosität > 50 mPas, insbesondere bevorzugt eine Viskosität zwischen 100 mPas und 10000 mPas aufweisen.

Die Polyoxalkylene (D) können die allgemeine Form (D-1) haben:

$$R^1\text{-}\{[(C_2H_{4-d}R'_dO)_n(C_xH_{2x}O)_r(C_2H_{4-d}R''_dO)_t]\text{-}R^2\}_z \qquad \text{(D-1)}$$

wobei

$R^1$ dem Rest eines Alkohols, Polyetherols oder Phenols $R^1$-H entspricht (das H gehört zur OH-Gruppe des Alkohols oder Phenols). Bei $R^1$-H handelt es sich bevorzugt um ein- oder mehrwertiger Polyetheralkohole oder Alkohole mit Molmassen von vorzugsweise 32 bis 2000 g/mol und 1 bis 8, bevorzugt 1 bis 4 Hydroxylgruppen. Beispielhaft seien Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, oder auf Naturstoffen basierende, Hydroxylgruppen tragende Verbindungen, genannt.

Weiterhin sind

d 1 bis 3,
n größer oder gleich 0,
x 2 bis 10, bevorzugt 2,5 bis 4,

r größer oder gleich 0, bevorzugt 5 bis 350,
t größer oder gleich 0,

$$n + r + t \geq 1,$$

z 1 bis 8, bevorzugt 1 bis 4, besonders bevorzugt 1 und 2,
und
R' ein einwertiger aromatischer gegebenenfalls substituierter Kohlenwasserstoffrest,
R" ein Wasserstoffrest oder ein einwertiger Kohlenwasserstoffrest mit 1 bis 18 Kohlenstoffatomen,
$R^2$ ein H-Atom, ein einwertiger organischer linearer oder verzweigter Alkylrest mit der Kettenlänge $C_1$-$C_{40}$ oder ein Carboxyrest eines gegebenenfalls verzweigten Alkyl- oder Arylesters.

Die Verbindungen können sowohl als Reinstoffe als auch in statistischer Mischung miteinander vorliegen, wobei die in den Formeln angegebenen Zahlenwerte dem Mittelwert der statistischen Verteilung des Wertes der Indices entsprechen.

Geeignete Polysiloxane (P) werden z.B. in DE 10 353856 und DE 28 29906 beschrieben, deren Offenbarungsgehalt gerichtet auf die offenbarten Strukturen vollumfänglich hiermit zum Bestandteil dieser Offenbarung wird. Diese können nachfolgende Struktur (P-I)haben,

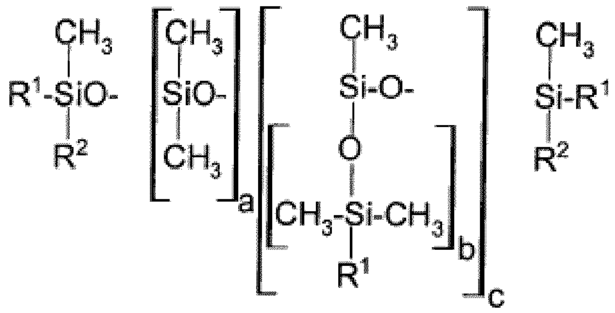

(P-I)

worin

$R^1$ im durchschnittlichen Molekül gleich oder verschieden sein kann und einem gegebenenfalls Doppelbindungen enthaltenden und eventuell -OH funktionellen Kohlenwasserstoffrest mit 1 bis 14 Kohlenstoffatomen oder einem Rest -O-R* mit R* gleich einem Alkylrest mit 1, 2, 3 oder 4 Kohlenstoffatomen oder dem Rest $-Z-(C_nH_{2n}-O)_mR'$ entspricht, wobei
R' ein Wasserstoffrest oder ein Alkylrest mit 1 bis 8 Kohlenstoffatomen oder Acyl ist,
$R^2$ Phenyl, Ethyl, Methyl, Hydroxy, Amin mit mindestens 90% Methyl ist,
Z ein divalenter Rest der Formel -O-, -NH-, $-NR^3-$ mit $R^3=C_{1-4}$-Alkylrest, -S-,$-(CH_2)_p-O-$ oder $-CH_2-CH(CH_3)-CH_2-O-$ mit p=2, 3, 4 ist,
n einen mittleren Zahlenwert von größer 2,5 bis 4,0,
m einen mittleren Zahlenwert von 5 bis 350,
a einen mittleren Zahlenwert von 4 bis 1500
b einen mittleren Zahlenwert von 0 bis 100,
c einen mittleren Zahlenwert von 0 bis 100 hat.

Geeignete modifizierte Polysiloxane (P) können weiterhin Strukturen der Formel (P-II) sein

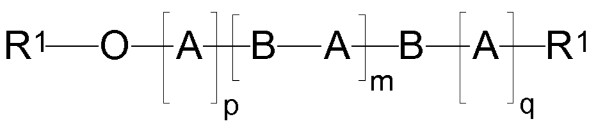

(P-II)

wobei die Indices bedeuten:

m einen Wert von 2 bis 100,
p einen Wert von 0 oder 1 und
q einen Wert von 0 oder 1,

und wobei die Reste ($R^1$, A, B) bedeuten:

$R^1$ ein H-Atom, ein einwertiger organischer linearer oder verzweigter Alkylrest mit der Kettenlänge $C_1$-$C_{40}$ oder ein Carboxyrest eines gegebenenfalls verzweigten Alkyl- oder Arylesters ist,

A ein Polyoxyalkylenblock der durchschnittlichen Formel (P-IIa) ist,

$$[(C_2H_{4-d}R'_dO)_n(C_xH_{2x}O)_r(C_2H_{4-d}R''_dO)_t] \qquad \text{(P-IIa)}$$

wobei
d 1 bis 3,
n größer oder gleich 0,
x 2 bis 10,
r größer oder gleich 0,
t größer oder gleich 0,

$$n + r + t \geq 1,$$

sind und
R’ ein einwertiger aromatischer gegebenenfalls substituierter Kohlenwasserstoffrest,
R" ein Wasserstoffrest oder ein einwertiger Kohlenwasserstoffrest mit 1 bis 18 C-Atomen,

B ein Polysiloxanblock der durchschnittlichen Formel (P-IIb) ist,

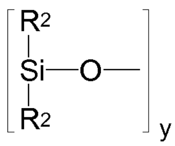

(P-IIb)

wobei

$R^2$ gleich oder verschieden ist und einen Alkylrest mit 1 bis 4 Kohlenstoffatomen oder einen Phenylrest umfasst und
y einen Wert von 5 bis 200,

hat.

Geeignete modifizierte Polysiloxane (P) können auch Strukturen der Formel (P-III) sein

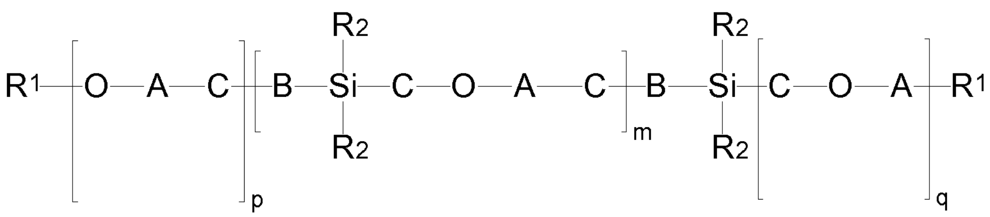

(P-III)

wobei die Reste $R^1$, A, B und Indices m, p und q die oben genannte Bedeutung wie in Formel (P-II) haben, der Rest $R^2$ die Bedeutung wie in Formel (P-IIb) und

C ein linearer oder verzweigter Alkylenrest mit 2 bis 20 Kohlenstoffatomen ist.

Die Verbindungen können sowohl als Reinstoffe als auch in statistischer Mischung miteinander vorliegen, wobei die in den Formeln angegebenen Zahlenwerte dem Mittelwert der statistischen Verteilung des Wertes der Indices entsprechen.

Bevorzugt wird als Verbindung E ein Polyetherpolysiloxan der Formel (E-I) eingesetzt

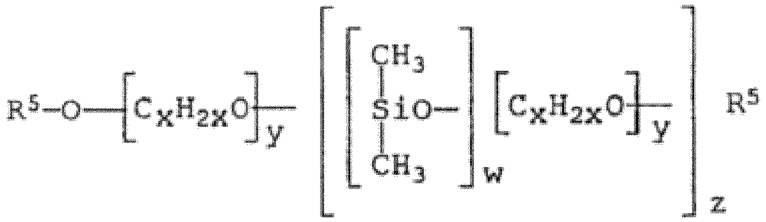

(E-I)

wobei $R^5$ im durchschnittlichen Molekül gleich oder verschieden sein kann und einem Alkylrest mit 1 bis 8 Kohlenstoffatomen, bevorzugt Methyl, Ethyl, n- oder i-Propyl, oder n-, s-, oder t-Butyl entspricht, jedoch mindestens 90% der Reste $R^5$ gleich Methylreste sind,
x einen mittleren Zahlenwert von 2,6 bis 3,0, bevorzugt, 2,8 - 3,0
y einen mittleren Zahlenwert von 8 bis 80, bevorzugt 8 - 40,
w einen mittleren Zahlenwert von 7 bis 50, bevorzugt 7 - 25,
z einen mittleren Zahlenwert von 1,5 bis 10, bevorzugt 1,5 - 5 hat.

Der Polyetheranteil der Verbindung E nach Formel (E-I) ist mit y indiziert. Diese Polyether werden nach dem Fachmann geläufigen Methoden aus der Umsetzung von Alkylenoxiden in einer ringöffnenden Polymerisation gestartet mit Alkoholen mit dem Rest $R^5$ gewonnen. Bevorzugterweise werden die Alkylenoxide unter basischen Bedingungen zu den entsprechenden Polyethern umgesetzt. Vorzugsweise erfolgt die Herstellung der Polyether durch Umsetzung eines Startalkohols mit Ethylenoxid und/oder Propylenoxid. Die Polymerisation der Alkylenoxide kann rein oder in belieben Mischungen durchgeführt werden. Die Reihenfolge der Anlagerungsschritte kann beliebig erfolgen, so dass je nach vorgehensweise statistisch, blockartig oder gradientenartig ungesättigte Polyether erhalten werden.

Als Alkylenoxide können generell alle dem Fachmann bekannten Alkylenoxide, rein oder in beliebigen Mischungen, eingesetzt werden. Bevorzugt können Ethylenoxid, Propylenoxid, 1,2-Butylenoxid, 2,3-Butylenoxid, Isobutylenoxid, Octen-1-oxid, Decen-1-oxid, Dodecen-1-oxid, Tetradecen-1-oxid, Hexadecen-1-oxid, Octadecen-1-oxid, $\alpha$-Pinenepoxid, Cyclohexenoxid, 3-Perfluoroalkyl-1,2-Epoxypropan und Styroloxid eingesetzt werden. Besonders bevorzugt werden Ethylenoxid, Propylenoxid, Dodecen-1-oxid und Styroloxid eingesetzt. Ganz besonders bevorzugt werden Ethylenoxid und/oder Propylenoxid eingesetzt.

Die vorgenannten Verbindungen können auch auf geeigneten Trägermaterialien gebunden vorliegen und so hydrophobierte Feststoffe bilden. Zu den zu diesem Zweck verwendeten Feststoffen gehören beispielsweise Kieselsäure (F), Aluminiumoxid, Erdalkalicarbonate oder ähnliche, dem Stand der Technik bekannte und übliche feinteilige Feststoffe. Organische hydrophobe Substanzen sind für diesen Zweck bekannte Erdalkalisalze von langkettigen Fettsäuren mit 12 bis 22 Kohlenstoffatomen, die Amide solcher Fettsäuren, Polyharnstoffe (G) und Wachse (H), sowie Mischungen aus diesen Feststoffen.

Beispielhafte Harnstoffderivate (G) werden in DE 3245482 und DE 19917186 beschrieben. DE 19917186 gibt die allgemeine Formel (G-1) an:

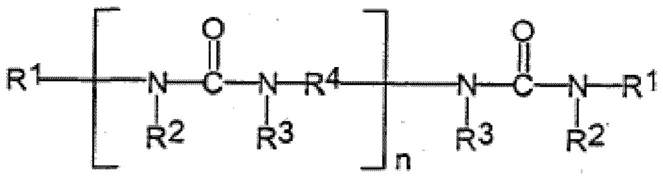

(G-1)

wobei

$R^1$ ein Kohlenwasserstoffrest mit 4 bis 30 Kohlenstoffatomen oder ein Kohlenwasserstoffrest mit 4 bis 24 Kohlenstoffatomen und einem Stickstoffatom oder ein Kohlenwasserstoffrest mit 4 bis 30 Kohlenstoffatomen und einer Carbonylgruppe,

$R^2$ ein Wasserstoffatom oder ein Kohlenwasserstoffrest mit 1 bis 24 Kohlenstoffatomen,

$R^3$ ein Wasserstoffatom oder ein Kohlenwasserstoffrest mit 1 bis 24 Kohlenstoffatomen,
$R^4$ ein organischer Rest mit 2 bis 30 Kohlenstoffatomen und
n = 0 bis 5 sind.

Beispiele für die Wachse (H) sind Polyethylen-, Polyamidwachse oder deren Mischungen mit einem Schmelz- bzw. Erweichungspunkt oberhalb der Anwendungstemperatur, bevorzugt bei einer Raumtemperatur von 25 °C.
Verbindungen N im Sinne dieser Erfindung sind grenzflächenaktive Substanzen, die zur Klasse der amphoteren Tenside gehören:

In den folgenden Formeln zur Erklärung der Verbindungen N entspricht der Rest $R^{21}$

Wasserstoff oder einen linearen oder verzweigten, gegebenenfalls ungesättigten Alkylrest mit 1-25 Kohlenstoffatomen, beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2- Methyl-1-butyl, 3-Methyl-1-butyl, 2-Methyl-2-butyl, 3-Methyl-2-butyl, 2,2- Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl- 2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Allyl, Undecaenyl, Dodecaenyl, Octadecaenyl, Eicosaenyl, Docosaenyl, Tetracosaenyl, Octadecadienyl, Octadecatrienyl, Eicosatetraenyl, Eicosapentaenyl, Docosapentaenyl, oder Docosahexaenyl.

Amphotere Tenside:

- Betaine der allgemeinen Formel (II), wie beispielsweise 3-[N,N-Dimethyl(3-myristoylaminopropyl)ammonio]propansulfonat (kommerziell erhältlich unter dem Namen Amidosulfobetaine-14) oder 1-(3-Sulfopropyl)pyridinium betain oder 3-Dodecyl-dimethylammonio-propan-1-sulfonate (kommerziell erhältlich unter dem Namen ZWITTERGENT 3-12) oder 3-[(3-Cholamidopropyl)dimethylammonio]-1-propansulfonate (kommerzialisiert unter dem Namen CHAPS) oder Laurylbetain (kommerzialisiert unter dem Namen REWOTERIC AM DML-35) oder Cocamidopropylbetain (kommerzialisiert unter den Namen TEGO Betain F 50 oder L 7) Alkylglycine, z.B. n-Dodecyl-N,N-dimethylglycin (kommerzialisiert unter dem Namen EMPIGEN BB) oder Talgglycin (kommerzialisiert unter dem Namen REWOTERIC AM TEG), der allgemeinen Formel

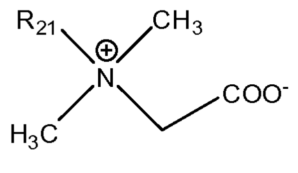

(T-II)

- Sultaine, z.B. Cocamidopropylhydroxysultain (kommerzialisiert unter dem Namen REWOTERIC AM CAS), der allgemeinen Formel

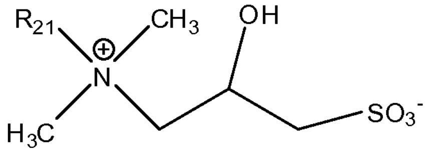

- Amphopropionate, z.B. Cocoamphoproprionat (kommerzialisiert unter dem Namen REWOTERIC AM KSF 40), der allgemeinen Formel

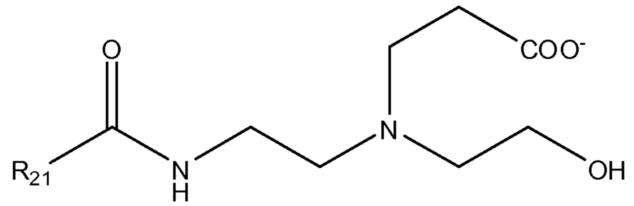

- Amphoacetate, z.B. Natrium cocoamphoacetat (kommerzialisiert unter dem Namen REWOTERIC AM C), der allgemeinen Formel

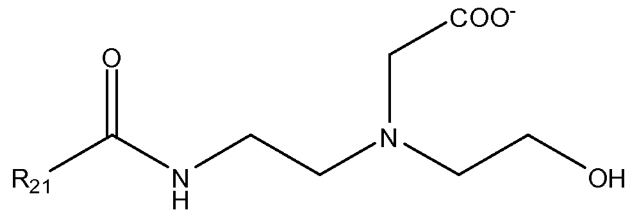

- Aminoxide, z.B. cocamidopropyldimethylaminoxid (kommerzialisiert unter dem Namen VAROX 1770), der allgemeinen Formel

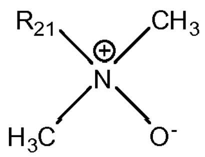

- Siliconbetaine, z.B. kommerzialisiert unter dem Namen TEGOPREN 6950.

Zitierte Handelsnamen sind Warenzeichen der Firmen: TEGOPREN, REWOTERIC sind Warenzeichen der Evonik Industries AG.

EMPIGEN ist Warenzeichen der Albright&Wilson
VAROX ist Warenzeichen der R.T. Vanderbilt
ZWITTERGENT ist Warenzeichen der Calbiochem-Novachem
Die oben genannten Verbindungen N können allein oder in beliebigen Gemischen miteinander eingesetzt werden. Weitere übliche Lösungsmittel, Zusatzstoffe und Additive können ebenfalls beigemischt sein oder werden.
Weitere Gegenstände der Erfindung sind durch die Ansprüche gekennzeichnet.

Die erfindungsgemäßen Mineralische Baustoffmasse werden nachfolgend beispielhaft beschrieben, ohne dass die Erfindung als auf diese beispielhaften Ausführungsformen beschränkt angesehen sein soll.
Sind in dieser Beschreibung Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben wenn nicht anders angegeben auf die Gesamtzusammensetzung.

Werden nachfolgend Mittelwerte angegeben, so handelt es sich, wenn nicht anders angegeben um arithmetische Mittelwerte (Zahlenmittel). Werden nachfolgend Messwerte angegeben, so wurden diese Messwerte, wenn nicht anders angegeben, bei einem Druck von 1013,25 hPa und einer Temperatur von 23°C ermittelt.

Die vorliegende Erfindung wird an Hand der Abbildungen 1, 2 und 3 näher erläutert, ohne dass der Gegenstand der Erfindung auf diese beispielhaften Ausführungsformen beschränkt sein soll. Die Abbildungen zeigen Höhendiagramme der Oberflächen der ausgehärteten Baustoffmassen entlang einer Linie, deren Güte mit der in den Beispielen beschriebenen Methode 3 bestimmt wurde.

Anhand von optischen Untersuchungen mittels des geübten Auges oder unter Zuhilfenahme eines Mikroskops werden die Oberflächen der ausgehärteten und getrockneten Baustoffmassen bewertet. Anhand der Anzahl, Form und Ausprüfung der oberflächlichen Unebenheiten mit Kratern, Dellen oder sogenannten pin-holes kann die Güte der Oberfläche und damit auch die Güte und Qualität der Baustoffmasse bewertet werden.

Mit Hilfe eines Mikroskops Leica® DMRE mit einem Scanner Leica® TCSE kann die qualitative Beurteilung um eine quantitative Aussage erweitert werden. Mit Hilfe einer Oberflächenabtastung durch den Scanner können die Anzahl der Abweichungen und die Größenordnung der Abweichung der Oberflächenglätte in Millimeter oder deren Bruchteilen bestimmt werden. Pro 1 $cm^2$ Oberfläche wurden so mehrfach Messfelder definiert und je 100 Messscans pro 1 cm durchgeführt.

Abbildung 1 zeigt den Querschnitt (bestimmt mit einem Mikroskop Leica® DMRE mit einem Scanner Leica® TCSE) durch eine Oberfläche einer getrockneten SLU, die gemäß Methode 3 als schlechte Oberfläche mit vielen Kratern mit der Bewertung 3 beurteilt wurde.

Abbildung 2 zeigt den Querschnitt (bestimmt mit einem Mikroskop Leica® DMRE mit einem Scanner Leica® TCSE) durch eine Oberfläche einer getrockneten SLU, die gemäß Methode 3 als mittelgute Oberfläche mit wenigen Kratern mit der Bewertung 2 beurteilt wurde.

Abbildung 3 zeigt den Querschnitt (bestimmt mit einem Mikroskop Leica® DMRE mit einem Scanner Leica® TCSE) durch eine Oberfläche einer getrockneten SLU, die gemäß Methode 3 als gute Oberfläche mit wenigen bis gar keinen Kratern mit der Bewertung 1 beurteilt wurde.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

**Beispiele:**

Beispiel 1: Herstellung einer Baustoffmasse am Beispiel einer Bodenausgleichsmasse SLU (self-levelling underlayment, selbstnivellierende Bodenausgleichsmasse)

Zur Herstellung der zu testenden SLUs wurden die in Tabelle 1 angegebenen Komponenten verwendet, wobei die Zusammensetzung wie in Tabelle 2 angegeben variiert wurde.

In den Rührtopf eines Hobart-Mischers wurden die pulverförmigen Komponenten der herzustellenden und zu testenden SLUs eingewogen. Der Topf wurde am Hobart-Mischer befestigt und gesichert. Zur Staubreduzierung wurde ein feuchtes Fliestuch auf das Schutzgitter gelegt. Die Trockenmischung wurde zwei Minuten lang bei der Rührstufe 1 gemischt. Die notwendige Wassermenge wurde bei gleicher Rührstufe (Stufe 1) eine Minute lang eingearbeitet. Dann wurde die Rührstufe erhöht.

Der Rührer wurde aus der Halterung gelöst, und per Hand wurde der entstandene Bodensatz kurz aufgerührt. Der Rührer wurde wieder befestigt und die Rührstufe auf Stufe 2 erhöht. Der Rührer wurde wieder angestellt und die Mischung zwei Minuten lang durchmischt.

Die so erhaltene Mischung wird innerhalb von 1 bis 10 Minuten zur Bestimmung des Luftgehalts und des Ausbreitmaßes verwendet. Die Versuche zeichnen sich durch gute Wiederholbarkeit aus.

Nach Härtung und Trocknung der Baustoffmasse wird die Oberflächengüte beurteilt.

**Bestimmung von Luftgehalt, Ausbreitmaß und Oberflächengüte:**

Methode 1: Bestimmung des Porenvolumens nach DIN 18555 Teil 2

Die fertige SLU wurde in den Behälter eines Luftgehaltsprüfers (Typ Testing, Seriennummer 2558, Hersteller tecnotest, IT) zur Bestimmung des Porenvolumens der Firma Form+Test® gegeben und glattgestrichen; der Rest wurde für die Bestimmung des Ausbreitmaßes verwahrt. Dann wurde der obere Teil des Gerätes aufgesetzt, das Gerät verschlossen und mit destilliertem Wasser bis zum Überlauf befüllt. Dann wurde Luft in den oberen Teil des Behälters gepumpt und der Druck so eingestellt, dass der Zeiger der Skala auf dem Null-Strich stand. Das System wurde über ein Ventil entspannt und der Luftgehalt (in %) auf der Anzeige abgelesen.

Methode 2: Bestimmung des Ausbreitmaßes auf der Matrixplatte nach DIN 18555 Teil 2

Der Rest der SLU-Mischung wurde in eine Testhülse mit 30 mm Durchmesser und einer Länge von 50 mm gefüllt und auf die horizontal ausgerichtete Laborbank gegeben. Unter der Testhülse lag eine unbehandelte PE-Folie. Die gefüllte Testhülse wurde ca. 5 cm hoch für 15 Sekunden angehoben und dann endgültig (ohne Nachtropfen) vom Tisch entfernt. Nach 60 und 90 Sekunden wurde mittels Lineal das Ausbreitmaß bestimmt und notiert. Das Ausbreitmaß entspricht dabei dem Mittelwert der beiden Durchmesser gemessen entlang der Halbradien der kreisförmigen oder ellipsenförmigen Ausbreitung der Baustoffmasse.

Methode 3: Beurteilung der getrockneten SLU-Oberfläche

Nach einer Trocknungszeit von 24 h wurde die Oberfläche der nach Methode 2 erhaltenen getrockneten SLU visuell beurteilt. Hierbei wurde die Oberfläche nach Anzahl der Krater, d.h. Oberflächenstörungen, wie z.B. sogenannte "pin holes", die sich während des Trocknungsvorganges der SLU gebildet haben, beurteilt. Die Bewertung erfolgte nach folgendem Schema: keine Krater (0 - 1 / $cm^2$), wenige Krater (2 - 10 / $cm^2$), viele Krater (> 10 / $cm^2$). Zusätzlich wurde die Bewertung der Oberflächengüte mit Hilfe eines Mikroskops (z.B. konfokales Laserscanningmikroskop) durchgeführt. Als Oberflächenstörung wurde eine Abweichung von einer ebenen Fläche von mindestens 0,05 mm betrachtet. In Grenzfällen wurde der Gesamteindruck zur Beurteilung herangezogen.

Als Beispiel für die Bewertung der Oberflächengüte können die mittels Mikroskopie erstellten Abbildungen 1 bis Abbildung 3 dienen.
Als Maß für die Oberfläche wird die Größe z erhoben. Als Krater werden Abweichungen) z vom Mittelwert z (quer) mit größer oder gleich 0,05 mm angesehen.
Demgemäß sind drei Krater in Abb. 1, ein Krater in Abb. 2 und kein Krater in Abb. 3 gezeigt.

Tabelle 1:
Zusammensetzung der erfindungsgemäßen und zum Vergleich hergestellten SLUs

| Bestandteile | erfindungsgem. | Vergleich |
|---|---|---|
| Portlandzement | 185 g | 185 g |
| Tonerdezement | 115 g | 115 g |
| $CaSO_4$ Hemihydrat | 65 g | 65 g |
| Quarzsand | 406,7 g | 406,7 g |
| Kalksteinmehl | 194 g | 194 g |
| Redisp. Pulver (Vinnapas® 5023 L - Wacker AG) | 20 g | 20 g |
| $Li_2CO_3$ | 1 g | 1 g |
| erfindungsgemäße Zusammensetzung geträgert auf Flugasche (Mischung aus einer Verbindung E in Form eines Polyetherpolysiloxans gemäß Formel (E-I) und einer Verbindung N in Form eines Betains gemäß Formel (II) - Mischungsverhältnis gemäß Tabelle 2) | 1,5 g | - |
| Zitronensäure | 1,7 g | 1,7 g |
| Schwundreduzierer (TEGO® Sitren® PSR 100) | 6,5 g | 6,5 g |
| Fließmittel (Melflux® 2651F - BASF SE) | 2,5 g | 2,5 g |
| Stabilisierer (Starvis® 3003F - BASF SE) | 1,1 g | 1,1 g |
| Zwischensumme | 1000 g | 998,5 g |
| Wasser | 213,6 g | 213,6 g |
| Summe | 1213,6 g | 1212,1 g |

Tabelle 2:
Eingesetzte Massenverhältnisse von Entschäumer zu Netzmittel und Ergebnisse der Tests nach den Methoden 1 bis 3

| Verhältnis von Verbindung E zu Verbindung N | Blindwert (ohne Verbindung N und ohne Verbindung E) | nur E, kein N | 18:1 | 9:1 | 6:1 | 4,5:1 | 3:1 | 1,8:1 | 0,9:1 | nur N, kein E |
|---|---|---|---|---|---|---|---|---|---|---|
| Bewertung der Oberflächengüte | 3 | 3 | 3 | 2 | 1 | 1 | 2 | 2 | 3 | 3 |
| Luftgehalt [%] | 12,1 | 7,4 | 9,3 | 10,1 | 9,5 | 12,1 | 13,6 | 16,5 | 18,2 | 26,7 |
| Ausbreitmaß nach 60 s [mm] | 129 | 137 | 137 | 135 | 136 | 131 | 129 | 129 | 130 | 130 |
| Ausbreitmaß nach 90 s [mm] | 131 | 139 | 139 | 137 | 138 | 133 | 131 | 131 | 132 | 132 |

Wie den in Tabelle 2 aufgelisteten Ergebnissen zu entnehmen ist, sind bei Abmischungen mit einem Massenverhältnis von Verbindung E zu Verbindung N von 6:1 die Eigenschaften der selbstverlaufenden Bodenausgleichsmasse in Bezug auf Oberflächengüte, Luftgehalt und Ausbreitmaß optimal eingestellt.

## Patentansprüche

1. Mineralische Baustoffmasse enthaltend eine Zusammensetzung bestehend aus einer Mischung oder umfassend eine Mischung enthaltend,

    a) mindestens eine Komponente, die eine Verbindung N aufweist, welche ein amphoteres Tensid darstellt, die in wässrigen zementären Bindemittelsystemen benetzende Wirkung zeigt und
    b) mindestens eine Komponente, die eine Verbindung E aufweist, welche ein unter Anwendungsbedingungen in Wasser unlösliches Öl ist, die in wässrigen zementären Bindemittelsystemen entschäumende Eigenschaften zeigt, wobei die Verbindung E von der Verbindung N verschieden ist und

    das Massenverhältnis von Verbindung N zu Verbindung E von 0,001 zu 1 bis 1000 zu 1 beträgt,
    wobei die Komponente a) und/oder die Komponente b) die Verbindung N oder die Verbindung E aufgetragen oder geträgert, absorbiert, verkapselt oder adsorbiert auf einem Trägermaterial aufweist, wobei das Trägermaterial aus anorganischen oder organischen Materialien oder deren Mischungen ausgewählt ist.

2. Mineralische Baustoffmasse gemäß Anspruch 1, wobei das Trägermaterial ausgewählt ist aus Kieselsäuren, Aluminiumoxid, Sand, Zement, Flugasche, Bentonite, Xonolite oder Kalk oder Stärke, Cellulose, Holzgranulate oder Proteine, Kunststoffgranulat.

3. Mineralische Baustoffmasse nach zumindest einem der Ansprüche 1 oder 2, **dadurch gekennzeichnet, dass** die Komponente a) und/oder die Komponente b) ausschließlich aus der jeweiligen Verbindung N oder der jeweiligen Verbindung E besteht.

4. Mineralische Baustoffmasse nach zumindest einem der Ansprüche 1 bis 3, **dadurch gekennzeichnet, dass** der Massenanteil der Verbindungen N oder der Verbindungen E bezogen auf die Summe der Massen der Verbindungen N bzw. Verbindungen E und der Trägermaterialien in den jeweiligen Komponenten a) und/oder b) von 0,001 bis 50 Gew.-%, bevorzugt 0,01 bis 30 Gew.-%, besonders bevorzugt 0,1 bis 20 Gew.-%, ganz besonders bevorzugt 1 bis 10 Gew.-% beträgt.

5. Mineralische Baustoffmasse nach zumindest einem der Ansprüche 1 bis 4, **dadurch gekennzeichnet, dass** mindestens eine Verbindung N in Komponente a) ein Betain ist, insbesondere ein bei einer Temperatur von 25 °C als Feststoff vorliegendes Betain.

6. Mineralische Baustoffmasse nach zumindest einem der Ansprüche 1 bis 5, **dadurch gekennzeichnet, dass** mindestens eine Verbindung E in Komponente b) ein Polyetherpolysiloxan ist und das Polyetherpolysiloxan auf einem Trägermaterial, vorzugsweise einem anorganischen Trägermaterial, bevorzugt Flugasche, aufgebracht ist.

7. Mineralische Baustoffmasse nach zumindest einem der Ansprüche 1 bis 6, **dadurch gekennzeichnet, dass** die Komponente a) ein bei einer Temperatur von 25 °C als Feststoff vorliegendes Betain ist, die Komponente b) aus einem Polyetherpolysiloxan aufgebracht auf Flugasche als Trägermaterial besteht, dass der Anteil der Verbindung E an Komponente b) von 1 bis 10 Gew.-% und das Massenverhältnis von Komponente a) zu Komponente b) von 1 zu 10000 bis 1 zu 1, bevorzugt 1 zu 1000 bis 1 zu 10 und besonders bevorzugt 1 zu 500 bis 1 zu 20 beträgt.

8. Mineralische Baustoffmasse nach zumindest einem der Ansprüche 1 bis 7 **dadurch gekennzeichnet, dass** die Zusammensetzung neben der Mischung enthaltend die Komponenten a) und b) weitere Zusätze aufweist und der Massenanteil der Summe der Komponenten a) und b) von 0,001 bis 10 Gew.-%, bevorzugt von 0,01 bis 5 Gew.-% und besonders bevorzugt von 0,05 bis 1 Gew.-% bezogen auf die Masse der gesamten Zusammensetzung beträgt.

9. Mineralische Baustoffmasse nach zumindest einem der Ansprüche 1 bis 8, **dadurch gekennzeichnet, dass** die Zusammensetzung neben der Mischung enthaltend die Komponenten a) und b) weitere Zusätze aufweist, wobei die weiteren Zusätze ausgewählt sind aus Wasser, Bindern oder Bindemitteln, vorzugsweise Portlandzement und/oder Tonerdezement, Füllstoffen, vorzugsweise Calziumsulfat, dessen Hydrate,
    Quarzsand und/oder Kalksteinmehl,

Additive, vorzugsweise redispergierbare Pulver,
Abbindebeschleuniger, vorzugsweise $Li_2CO_3$,
Abbindeverzögerer, vorzugsweise Zitronensäure,
Schwundreduzierer, Verflüssiger und Fließmitteln,

**10.** Mineralische Baustoffmasse nach zumindest einem der Ansprüche 1 bis 9, **dadurch gekennzeichnet, dass** die Zusammensetzung neben der Mischung enthaltend die Komponenten a) und b) weitere Zusätze aufweist, wobei ein weiterer Zusatz Portlandzement, Gips und/oder Tonerdezement oder deren Mischungen ist.

**11.** Mineralische Baustoffmasse nach zumindest einem der Ansprüche 1 bis 10, **dadurch gekennzeichnet, dass** die Baustoffmasse eine selbstverlaufende Bodenausgleichsmasse oder eine selbstnivellierende Bodenausgleichsmasse ist.

**12.** Verfahren zur Herstellung einer Baustoffmasse nach zumindest einem der Ansprüche 1 bis 11, **dadurch gekennzeichnet, dass** die Zusammensetzung, mit Wasser und Bindern, vorzugsweise Portlandzement und/oder Tonerdezement, und optional einer oder mehrerer weiterer Zusätzen, ausgewählt aus Füllstoffen, vorzugsweise Calciumsulfat, dessen Hydrate,
Quarzsand und/oder Kalksteinmehl,
Additive, vorzugsweise redispergierbare Pulver,
Abbindebeschleuniger, vorzugsweise Lithiumcarbonat,
Abbindeverzögerer, vorzugsweise Zitronensäure,
Schwundreduzierer, Verflüssiger und Fließmitteln,
vermischt wird.

**Claims**

**1.** Mineral construction compound containing a composition consisting of a mixture or comprising a mixture containing

a) at least one component which comprises a compound N which represents an amphoteric surfactant and which exhibits wetting activity in aqueous cementitious binder systems and
b) at least one component which comprises a compound E which is an oil that is insoluble in water under application conditions and which exhibits defoaming properties in aqueous cementitious binder systems, the compound E being different from the compound N and

the mass ratio of compound N to compound E being from 0.001:1 to 1000:1, wherein component a) and/or component b) comprise/comprises the compound N or the compound E in applied or carried, absorbed, encapsulated or adsorbed form on a carrier material, wherein the carrier material is selected from inorganic or organic materials or mixtures thereof.

**2.** Mineral construction compound according to Claim 1, wherein the carrier material is selected from silicas, aluminium oxide, sand, cement, flyash, bentonites, xonotlites or lime or starch, cellulose, wood granules or proteins, plastics pellets.

**3.** Composition according to at least one of Claims 1 and 2, **characterized in that** component a) and/or component b) consist/consists exclusively of the respective compound N or of the respective compound E.

**4.** Mineral construction compound according to at least one of Claims 1 to 3, **characterized in that** the mass fraction of the compounds N or of the compounds E, based on the sum of the masses of the compounds N and/or compounds E and of the carrier materials in the respective components a) and/or b), is from 0.001% to 50% by weight, preferably 0.01% to 30% by weight, more preferably 0.1% to 20% by weight, very preferably 1% to 10% by weight.

**5.** Mineral construction compound according to at least one of Claims 1 to 4, **characterized in that** at least one compound N in component a) is a betaine, particularly a betaine which is present as a solid at a temperature of 25°C.

**6.** Mineral construction compound according to at least one of Claims 1 to 5, **characterized in that** at least one compound E in component b) is a polyetherpolysiloxane and the polyetherpolysiloxane is applied on a carrier material, preferably an inorganic carrier material, more preferably flyash.

**7.** Mineral construction compound according to at least one of Claims 1 to 6, **characterized in that** component a) is a betaine present as a solid at a temperature of 25°C, component b) consists of a polyetherpolysiloxane applied to flyash as carrier material, **in that** the fraction of the compound E in component b) is from 1% to 10% by weight, and the mass ratio of component a) to component b) is from 1:10 000 to 1:1, preferably 1:1000 to 1:10 and more preferably 1:500 to 1:20.

**8.** Mineral construction compound according to at least one of Claims 1 to 7, **characterized in that** the composition, besides the mixture containing components a) and b), comprises further additions, and the mass fraction of the sum of components a) and b) is from 0.001% to 10% by weight, preferably from 0.01% to 5% by weight and more preferably from 0.05% to 1% by weight, based on the mass of the overall composition.

**9.** Mineral construction compound according to at least one of Claims 1 to 8, **characterized in that** the composition, in addition to the mixture containing components a) and b), comprises further additions, the further additions being selected from water, binding agents or binders, preferably portland cement and/or alumina cement,
fillers, preferably calcium sulphate, its hydrates, silica sand and/or finely ground limestone, additives, preferably redispersible powders,
setting accelerators, preferably $Li_2CO_3$,
setting retarders, preferably citric acid, shrinkage reducers, plasticizers and superplasticizers.

**10.** Mineral construction compound according to at least one of Claims 1 to 9, **characterized in that** the composition, besides the mixture containing components a) and b), comprises further additions, with one further addition being portland cement, gypsum and/or alumina cement or mixtures thereof.

**11.** Mineral construction compound according to at least one of Claims 1 to 10, **characterized in that** the construction compound is a self-levelling underlayment or a self-levelling flooring compound.

**12.** Method for producing a construction compound according to at least one of Claims 1 to 11, **characterized in that** the composition is mixed with water and binders, preferably portland cement and/or alumina cement, and optionally one or more further additions, selected from
fillers, preferably calcium sulphate, its hydrates, silica sand and/or finely ground limestone, additives, preferably redispersible powders,
setting accelerators, preferably lithium carbonate,
setting retarders, preferably citric acid, shrinkage reducers, plasticizers and superplasticizers.

**Revendications**

**1.** Matériau de construction minéral contenant une composition constituée par un mélange ou comprenant un mélange contenant :

a) au moins un composant qui comprend un composé N, qui est un tensioactif amphotère, qui présente un effet mouillant dans des systèmes de liant cimentaires aqueux, et
b) au moins un composant qui comprend un composé E, qui est une huile insoluble dans l'eau dans les conditions d'utilisation, qui présente des propriétés démoussantes dans des systèmes de liant cimentaires aqueux, le composé E étant différent du composé N, et

le rapport en masse entre le composé N et le composé E étant de 0,001 sur 1 à 1 000 sur 1,
le composant a) et/ou le composant b) comprenant le composé N ou le composé E appliqué ou supporté, absorbé, encapsulé ou adsorbé sur un matériau support, le matériau support étant choisi parmi les matériaux inorganiques ou organiques ou leurs mélanges.

**2.** Matériau de construction minéral selon la revendication 1, dans lequel le matériau support est choisi parmi les silices, l'oxyde d'aluminium, le sable, le ciment, les cendres volantes, la bentonite, la xonolite ou la chaux ou l'amidon, la cellulose, les granulés de bois ou les protéines, les granulés de plastique.

**3.** Matériau de construction minéral selon au moins l'une quelconque des revendications 1 ou 2, **caractérisé en ce que** le composant a) et/ou le composant b) sont exclusivement constitués par le composé N respectif ou le composé E respectif.

**4.** Matériau de construction minéral selon au moins l'une quelconque des revendications 1 à 3, **caractérisé en ce que** la proportion en masse des composés N ou des composés E par rapport à la somme des masses des composés N ou des composés E et des matériaux supports dans les composants a) et/ou b) respectifs est de 0,001 à 50 % en poids, de préférence de 0,01 à 30 % en poids, de manière particulièrement préférée de 0,1 à 20 % en poids, de manière tout particulièrement préférée de 1 à 10 % en poids.

**5.** Matériau de construction minéral selon au moins l'une quelconque des revendications 1 à 4, **caractérisé en ce qu'**au moins un composé N dans le composant a) est une bétaïne, notamment une bétaïne qui se présente sous forme solide à une température de 25 °C.

**6.** Matériau de construction minéral selon au moins l'une quelconque des revendications 1 à 5, **caractérisé en ce qu'**au moins un composé E dans le composant b) est un polyéther-polysiloxane et le polyéther-polysiloxane est appliqué sur un matériau support, de préférence un matériau support inorganique, de préférence des cendres volantes.

**7.** Matériau de construction minéral selon au moins l'une quelconque des revendications 1 à 6, **caractérisé en ce que** le composant a) est une bétaïne qui se présente sous forme solide à une température de 25 °C, le composant b) est constitué par un polyéther-polysiloxane appliqué sur des cendres volantes en tant que matériau support, **en ce que** la proportion du composé E dans le composant b) est de 1 à 10 % en poids et le rapport en masse entre le composant a) et le composant b) est de 1 sur 10 000 à 1 sur 1, de préférence de 1 sur 1 000 à 1 sur 10, et de manière particulièrement préférée de 1 sur 500 à 1 sur 20.

**8.** Matériau de construction minéral selon au moins l'une quelconque des revendications 1 à 7, **caractérisé en ce que** la composition comprend en plus du mélange contenant les composants a) et b) d'autres ajouts, et la proportion en masse de la somme des composants a) et b) est de 0,001 à 10 % en poids, de préférence de 0,01 à 5 % en poids et de manière particulièrement préférée de 0,05 à 1 % en poids, par rapport à la masse de la composition totale.

**9.** Matériau de construction minéral selon au moins l'une quelconque des revendications 1 à 8, **caractérisé en ce que** la composition comprend en plus du mélange contenant les composants a) et b) d'autres ajouts, les autres ajouts étant choisis parmi l'eau, les liants ou les agents de liaison, de préférence le ciment Portland et/ou le ciment alumineux,
les charges, de préférence le sulfate de calcium, ses hydrates,
le sable quartzeux et/ou la farine de pierre calcaire, les additifs, de préférence les poudres redispersibles, les accélérateurs de prise, de préférence $Li_2CO_3$,
les retardateurs de prise, de préférence l'acide citrique,
les réducteurs de retrait, les liquéfiants et les agents d'écoulement.

**10.** Matériau de construction minéral selon au moins l'une quelconque des revendications 1 à 9, **caractérisé en ce que** la composition comprend en plus du mélange contenant les composants a) et b) d'autres ajouts, un autre ajout étant du ciment Portland, du gypse et/ou du ciment alumineux ou leurs mélanges.

**11.** Matériau de construction minéral selon au moins l'une quelconque des revendications 1 à 10, **caractérisé en ce que** le matériau de construction est un matériau d'égalisation du sol auto-lissant ou un matériau d'égalisation du sol auto-nivelant.

**12.** Procédé de fabrication d'un matériau de construction minéral selon au moins l'une quelconque des revendications 1 à 11, **caractérisé en ce que** la composition est mélangée avec de l'eau et des liants, de préférence du ciment Portland et/ou du ciment alumineux, et éventuellement un ou plusieurs autres ajouts, choisis parmi :

les charges, de préférence le sulfate de calcium, ses hydrates,
le sable quartzeux et/ou la farine de pierre calcaire, les additifs, de préférence les poudres redispersibles, les accélérateurs de prise, de préférence le carbonate de lithium,
les retardateurs de prise, de préférence l'acide citrique,
les réducteurs de retrait, les liquéfiants et les agents d'écoulement.

Abbildung. 1:

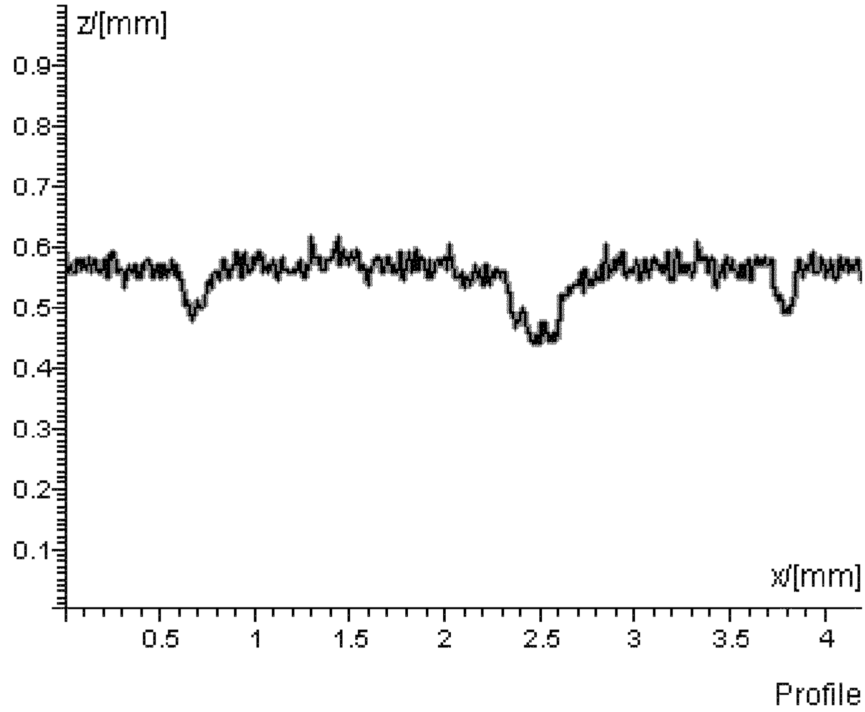


Abbildung 2:

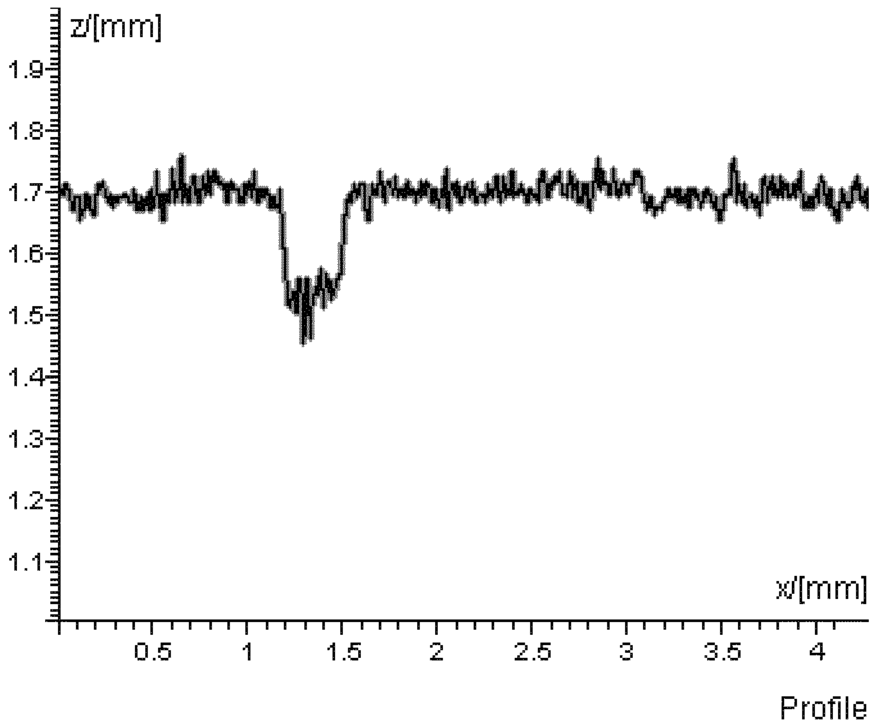

Abbildung 3:

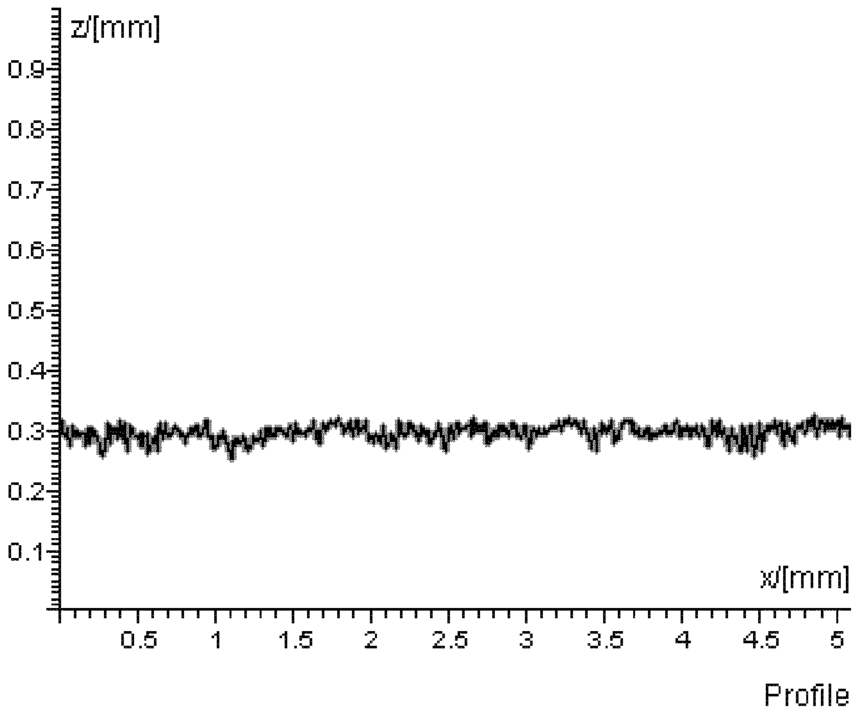

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- FR 2943665 A1
- EP 0934915 A1
- WO 2004056445 A1
- DE 2829906 A1
- DE 10107822 A1
- DE 10353856
- DE 2829906
- DE 3245482
- DE 19917186


### In der Beschreibung aufgeführte Nicht-Patentliteratur


- **LEOPOLDER.** *ZKG International,* 2010, vol. 32 (4
- **SCHUMACHER M.** *Baustoffpraxis,* 2009, vol. 22